# EUROPÄISCHE PATENTSCHRIFT

(11) **EP 0 818 355 B1**
(45) Veröffentlichungstag und Bekanntmachung des Hinweises auf die Patenterteilung: **09.08.2000**
(21) Anmeldenummer: 97108735.8
(22) Anmeldetag: 31.05.1997
(51) Int. Cl.: B60R 13/02, B60R 13/04, B44C 3/00

(54) **Verfahren zur Herstellung eines Zierteiles und Zierteil**
Method of manufacturing a decorative article
Procédé de fabrication d'un objet décoratif

(30) Priorität: 12.07.1996 DE 19628109
(43) Veröffentlichungstag der Anmeldung: 14.01.1998
(73) Patentinhaber: DaimlerChrysler AG, 70567 Stuttgart (DE)
(72) Erfinder: Benzing, Thomas, 72218 Wildberg (DE); Günter, Jürgen, Dr., 71069 Sindelfingen (DE); Hejtmanek, Jaroslav, 71159 Mötzingen (DE); Schellhorn, Luise, Dr., 71032 Böblingen (DE)

(56) Entgegenhaltungen:
- EP-A- 0 453 382
- DE-A- 3 406 521
- DE-C- 4 222 306

## Beschreibung

Die Erfindung betrifft ein Verfahren zur Herstellung eines Zierteiles für eine Innenausstattung eines Kraftfahrzeugs, das eine nach ästhetischen Gesichtspunkten gestaltete Oberfläche aufweist, sowie ein nach dem Verfahren hergestelltes Zierteil.

Aus der DE 41 41 955 A1 ist ein Innenausstattungsteil für ein Kraftfahrzeug bekannt, dessen Oberfläche mit einer durchsichtigen Matrix mit exotischen Fasern versehen ist. Basismaterial ist ein Glasfasersubstrat. Die durchsichtige Matrix ist mit gewebten Fasern versehen, die für eine irisierende Färbung sorgen. Als Schutzschicht dient eine Klarbeschichtung.

Aufgabe der Erfindung ist es, ein Verfahren sowie ein Zierteil der eingangs genannten Art zu schaffen, durch die in einfacher Weise die Optik der Innenausstattung verbessert wird.

Diese Aufgabe wird dadurch gelöst, daß die Oberfläche des Basisteils derart mit einer Harzschicht überzogen wird, daß alle Erhebungen der dreidimensional stukturierten Oberfläche überdeckt sind, daß anschließend die Harzschicht so weit abgeschliffen wird, daß die Spitzen der Erhebungen der Oberfläche mit angeschliffen werden, und daß schließlich wenigstens die abgeschliffene Fläche mit einem Klarlack versiegelt wird. Durch die erfindungsgemäße Lösung ist es möglich, neue ästhetische Effekte bei Zierteilen zu erzielen, indem die angeschliffenen Strukturen des Basisteiles intarsienähnlich zwischen der Harzschicht eingebettet sind. Das Zierteil ist sehr einfach gestaltet und kann ohne aufwendige Vorrichtungen und Werkzeuge hergestellt werden. Das erfindungsgemäße Verfahren ist insbesondere für die Innenausstattung von Kraftfahrzeug-Prototypen geeignet, da schnell und einfach Einzelanfertigungen zur stilistischen Beurteilung oder geringe Stückzahlen für Sonderserien angefertigt werden können. Das Basisteil ist aus einem solchen Material hergestellt, daß bei einem Kraftfahrzeugaufprall ein Splittern verhindert wird und somit eine ausreichende Insassensicherheit gewährleistet wird. Falls das erfindungsgemäße Verfahren zur Herstellung großer Stückzahlen verwendet wird, werden vorzugsweise die einzelnen Verfahrensschritte durch entsprechend automatisierte Maschinen und Werkzeuge durchgeführt.

In Ausgestaltung der Erfindung wird die abgeschliffene Fläche vor dem Aufbringen des Klarlackes poliert. Dadurch wird ein verbessertes Oberflächenfinish erzielt, wodurch auch die optische Wirkung des Zierteiles verbessert wird.

In weiterer Ausgestaltung der Erfindung wird die Harzschicht vor dem Aufbringen auf die Oberfläche des Basisteiles zumindest partiell eingefärbt. Dadurch ist es möglich, verbesserte optische Effekte zu erzielen. Dabei ist es möglich, das Harz lediglich lokal begrenzt einzufärben oder auch mit speziellen Pigmenten zu versehen, die der Harzschicht spezielle optische Effekte wie Perlglanz, Metalleffekte oder Polychrome verleihen.

In weiterer Ausgestaltung der Erfindung wird das Basisteil als Metalldruckgußteil, insbesondere als Aluminiumdruckgußteil, einstückig hergestellt. Dadurch wird eine schnelle und einfache Herstellung des Basisteiles gewährleistet. Bei Verwendung entsprechender duktiler Metallegierungen wird ein insassengefährdendes Splittern des Basisteiles im Fall eines Fahrzeugaufpralls vermieden.

In weiterer Ausgestaltung der Erfindung wird das Basisteil mit einstückig angeformten Befestigungselementen versehen. Das Zierteil ist daher direkt in entsprechende Befestigungsstellen der Innenausstattung einsetzbar, ohne daß zusätzliche Befestigungselemente benötigt werden.

Weitere Vorteile und Merkmale der Erfindung ergeben sich aus den Unteransprüchen. Nachfolgend sind bevorzugte Ausführungsbeispiele der Erfindung anhand der Zeichnungen sowie der Beschreibung dargestellt.
- Fig. 1: zeigt in einem Querschnitt ein Basisteil einer Ausführungsform eines erfindungsgemäßen Zierteiles,
- Fig. 2: das Basisteil nach Fig. 1, auf das in einem zweiten Verfahrensschritt eine Harzschicht aufgebracht ist, und
- Fig. 3: in einem Querschnitt gemäß den Fig. 1 und 2 das fertig hergestellte Zierteil.

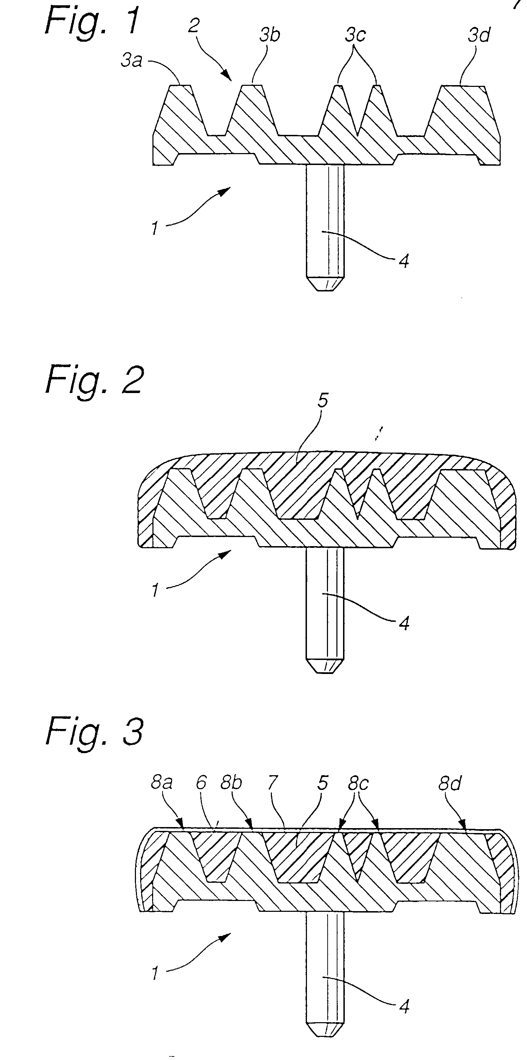

Ein in Fig. 1 im Querschnitt dargestelltes Basisteil (1) stellt ein plattenartiges Element dar, das mit einer dreidimensional strukturierten Oberfläche (2) versehen ist. Das Basisteil (1) ist einstückig als Aluminiumdruckgußteil hergestellt und weist auf seiner Rückseite wenigstens ein Befestigungselement (4) auf, das einstückig an dem Basisteil (1) angeformt ist. Die Oberfläche (2) des Basisteiles (1) ist mit im Querschnitt konisch zulaufenden Erhebungen (3a, 3b, 3c, 3d) versehen, die zueinander beabstandet über die Oberfläche (2) verteilt sind. Zwischen den einzelnen Erhebungen (3a, 3b, 3c, 3d) ergeben sich Vertiefungen, die nicht näher bezeichnet sind. Das als Grundkörper dienende Basisteil (1) ist in einem an sich bekannten Aluminiumdruckgußverfahren hergestellt, wobei ein solches Aluminiumdruckgußverfahren sich für die Herstellung größerer Stückzahlen eignet.

Bei einem nicht dargestellten Ausführungsbeispiel der Erfindung wird das Basisteil im wesentlichen manuell gefertigt. Diese nachfolgend näher beschriebene Herstellungsweise eignet sich insbesondere für geringe Stückzahlen, insbesondere für Prototypausführungen oder Sonderserien. Dabei wird zunächst ein von Hand oder mittels eines Computers gezeichnetes graphisches Muster in ein Modell übertragen, bei dem die Erhebungen über einer grob die Form des späteren Zierteiles bildenden Sockelplatte dargestellt sind. Von diesem Modell wird ein Negativabguß aus Silikon angefertigt, mittels dessen Muster aus niedrig schaltenden Metallegierungen gegossen werden. Der Musterrohling wird entformt und verputzt. Anschließend wird dieses Muster im Frontgußverfahren mit einem eingefärbten Reaktionsharz so weit aufgegossen, bis die Erhebungen der dreidimensional strukturierten Oberfläche vollkommen in dem Harz eingebettet sind. Nach der Aushärtung des Harzes wird die Oberfläche der Harzschicht so weit angeschliffen, daß die Spitzen der Erhebungen der dreidimensional strukturierten Oberfläche die Harzoberfläche durchbrechen und zusammen mit der Harzoberfläche angeschliffen werden. Durch ein entsprechendes Polieren wird die gewünschte Oberflächengüte erzielt.

Beim dargestellten Ausführungsbeispiel wird auf das Basisteil (1) im Bereich der dreidimensional strukturierten Oberfläche (2) mit Hilfe von Injektions- oder Spritztechniken eine Harzschicht (5) aufgebracht, die eingefärbt ist. Die Harzschicht (5) wird so dick auf die Oberfläche (2) aufgebracht, daß die dreidimensional strukturierte Oberfläche (2) einschließlich der Erhebungen (3a, 3b, 3c, 3d) vollkommen in der Harzschicht (5) eingebettet ist. Nach dem Aushärten der Harzschicht weist das aus Harz und Basisteil (1) kombinierte Zierteil in seiner Höhe und seiner Breite ein gewisses Übermaß auf. Anschließend wird die Oberfläche der Harzschicht (5) plan so weit abgeschliffen, bis die Spitzen (8a, 8b, 8c, 8d) der Erhebungen (3a, 3b, 3c, 3d) die geschliffene Fläche (6) der Harzschicht (5) durchbrechen und entsprechend plan mit angeschliffen werden. Mit dieser abgeschliffenen Fläche (6) hat das Zierteil einschließlich Basisteil (1) und Harzschicht (5) seine endgültige Form erreicht. Durch das Anschleifen der Erhebungen (3a, 3b, 3c, 3d), die in der Harzschicht (5) eingebettet sind, wird ein intarsienähnlicher Effekt erzielt, wobei die spezielle Gestaltung des Effektes durch eine geeignete Wahl der dreidimensional strukturierten Oberfläche (2) gestaltbar ist. Auf das fertige Zierteil wird als Schutzbeschichtung eine Klarlackversiegelung (7) aufgebracht. Das fertig hergestellte Zierteil ist in beliebigen Bereichen der Innenraumausstattung eines Kraftfahrzeugs einsetzbar und ersetzt insbesondere an sich bekannte holzfurnierte Zierleisten im Türen- oder Armaturenbrettbereich.

## Patentansprüche

1. Verfahren zur Herstellung eines Zierteils mit einem Basisteil mit einer dreidimensional strukturierten Oberfläche für eine Innenausstattung eines Kraftfahrzeuges,
**dadurch gekennzeichnet,**
daß die Oberfläche (2) des Basisteils (1) derart mit einer Harzschicht (5) überzogen wird, daß alle Erhebungen (3a, 3b, 3c, 3d) der dreidimensional strukturierten Oberfläche (2) überdeckt sind, daß anschließend die Harzschicht (5) so weit abgeschliffen wird, daß die Spitzen (8a, 8b, 8c, 8d) der Erhebungen (3a, 3b, 3c, 3d) der Oberfläche (2) mit angeschliffen werden, und daß schließlich wenigstens die abgeschliffene Fläche (6) mit einem Klarlack (7) versiegelt wird.

2. Verfahren nach Anspruch 1,
**dadurch gekennzeichnet,**
daß die abgeschliffene Fläche (6) vor dem Aufbringen des Klarlackes (7) poliert wird.

3. Verfahren nach Anspruch 1 oder 2,
**dadurch gekennzeichnet,**
daß die Harzschicht (5) vor dem Aufbringen auf die Oberfläche (2) des Basisteiles (1) zumindest partiell eingefärbt wird.

4. Verfahren nach einem der vorhergehenden Ansprüche,
**dadurch gekennzeichnet,**
daß das Basisteil (1) als Metalldruckgußteil, insbesondere als Aluminiumdruckgußteil, einstückig hergestellt wird.

5. Verfahren nach Anspruch 4,
**dadurch gekennzeichnet,**
daß das Basisteil (1) mit wenigstens einem einstückig angeformten Befestigungselement versehen wird.

6. Zierteil für eine Innenausstattung eines Kraftfahrzeuzgs,
**dadurch gekennzeichnet,**
daß es nach einem Verfahren gemäß einem der vorhergehenden Ansprüche hergestellt ist.

## Claims

1. A process for the manufacture of a decorative part with a basic part with a three dimensionally structured surface for the interior trim of a motor vehicle
**characterised in that**
the surface (2) ofthe basic part (1) is coated with a resin layer (5) in such a manner that all raised sections (3a, 3b, 3c, 3d) on the three dimensionally structured surface (2) are covered, that the resin layer (5) is then abraded until the peaks (8a, 8b, 8c, 8d) of the raised sections (3a, 3b, 3c, 3d) of the surface (2) are abraded with it, and that finally at least the abraded area (6) is sealed with a clear lacquer (7).

2. A process in accordance with Claim 1
**characterised in that**
the abraded area (6) is polished prior to the application of the clear lacquer (7).

3. A process in accordance with Claim 1 or 2
**characterised in that**
the resin layer (5) is at least partially coloured prior to its application over the surface (2) ofthe basic part (12).

4. A process in accordance with one of the preceding claims
**characterised in that**
the basic part (1) is manufactured in one part as a diecast metal part, in particular a diecast aluminium part.

5. A process in accordance with Claim 4
**characterised in that**
the basic part (1) is a provided with at lest one fixing element which is cast in one piece with it.

6. A decorative part for the interior trim of a motor vehicle
**characterised in that**
it is manufactured in accordance with a process as described in the preceding claims.

## Revendications

1. Procédé pour fabriquer un objet décoratif comportant une partie de base pourvue d'une surface à structure tridimensionnelle pour un équipement intérieur d'un véhicule automobile, caractérisé en ce
que la surface (2) de la partie de base (1) est recouverte par une couche de résine (5) de telle sorte que toutes les parties surélevées (3a,3b,3c,3d) de la surface à structure tridimensionnelle (2) sont recouvertes, qu'ensuite on meule la couche de résine (5) au point que les pointes (8a,8b,8c, 8d) des parties surélevées (3a,3b,3c,3d) de la surface (2) sont simultanément meulées et qu'enfin on scelle au moins la surface meulée (6) en utilisant une laque transparente (7).

2. Procédé selon la revendication 1, caractérisé en ce qu'on polit la surface meulée (6) avant le dépôt de la laque transparente (7).

3. Procédé selon la revendication 1 ou 2, caractérisé en ce qu'on colore au moins partiellement la couche de résine (5) avant le dépôt sur la surface (2) de la partie de base (1).

4. Procédé selon l'une des revendications précédentes, caractérisé en ce qu'on fabrique d'un seul tenant la partie de base (1) sous la forme d'une pièce métallique coulée sous pression, notamment sous la forme d'une pièce en aluminium coulée sous pression.

5. Procédé selon la revendication 4, caractérisé en ce qu'on équipe la partie de base (1) d'au moins un élément de fixation formé d'un seul tenant.

6. Article décoratif pour un équipement intérieur d'un véhicule automobile, caractérisé en ce qu'on le fabrique à l'aide d'un procédé selon l'une des revendications précédentes.
